(19) Europäisches Patentamt
European Patent Office
Office européen des brevets

(11) **EP 4 105 897 B1**

(12) **FASCICULE DE BREVET EUROPEEN**

(45) Date de publication et mention
de la délivrance du brevet:
**16.08.2023 Bulletin 2023/33**

(21) Numéro de dépôt: **22172836.3**

(22) Date de dépôt: **11.05.2022**

(51) Classification Internationale des Brevets (IPC):
**G06V 40/13** *(2022.01)*

(52) Classification Coopérative des Brevets (CPC):
**G06V 40/1324; G06V 40/1394**

(54) **DISPOSITIF DE CAPTURE BIOMÉTRIQUE**

VORRICHTUNG ZUR BIOMETRISCHEN ERFASSUNG

BIOMETRIC CAPTURE DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.06.2021 FR 2106506**

(43) Date de publication de la demande:
**21.12.2022 Bulletin 2022/51**

(73) Titulaire: **Idemia Identity & Security France
92400 Courbevoie (FR)**

(72) Inventeurs:
- **MAILLARD, Sylvain
92400 COURBEVOIE (FR)**
- **POITELON, Olivier
92400 COURBEVOIE (FR)**
- **DUMONT, Denis
92400 COURBEVOIE (FR)**

(74) Mandataire: **Idemia
2, place Samuel de Champlain
92400 Courbevoie (FR)**

(56) Documents cités:
**US-A1- 2005 271 258     US-A1- 2006 291 704**

## Description

La présente invention concerne le domaine de la reconnaissance biométrique, par exemple à des fins d'identification d'un individu ou de vérification du droit de l'individu à accéder à un lieu, à un objet ou à des informations.

ARRIERE PLAN DE L'INVENTION

Usuellement, un procédé de reconnaissance biométrique consiste à comparer, d'une part, des données biométriques extraites d'une image capturée d'une partie d'un corps d'un candidat à la reconnaissance et, d'autre part, des données biométriques de référence extraites d'une image d'une même partie d'un corps d'un utilisateur référencé préalablement, pour valider ou refuser la reconnaissance. Il existe des dispositifs de capture biométrique comprenant un boîtier muni d'une surface d'acquisition sur laquelle le candidat appose l'un de ses doigts, et une caméra agencée dans le boîtier pour prendre une ou plusieurs images dudit doigt afin de permettre le lancement du procédé de reconnaissance biométrique.

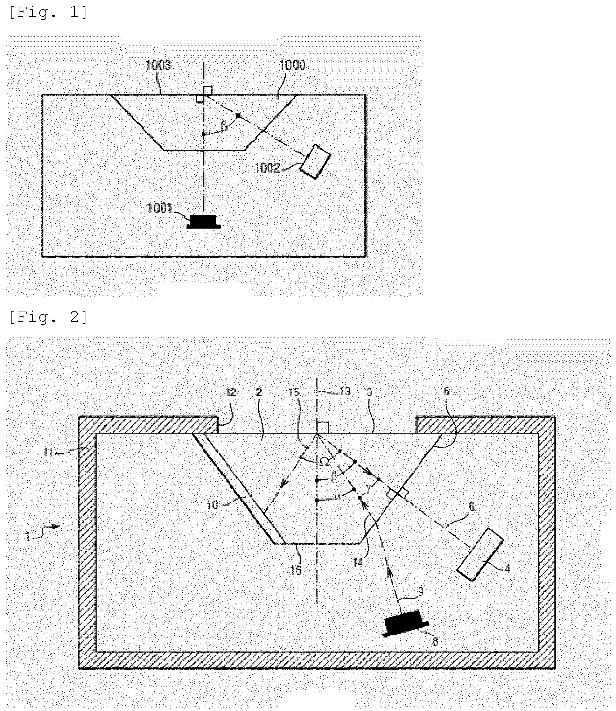

La figure 1 illustre un agencement classique d'un dispositif de capture biométrique comprenant un prisme 1000 en verre ou en plastique transparent, un système d'éclairage 1001 et un système d'acquisition optique comprenant une caméra 1002.

La caméra 1002 est associée à une face latérale du prisme 1000 et le système d'éclairage 1001 à la petite base du prisme 1000 opposée à la grande base du prisme dans laquelle est inscrite la surface d'acquisition 1003.

En service le système d'éclairage 1001 génère un faisceau lumineux qui traverse la petite base du prisme jusqu'à atteindre la surface d'acquisition 1003 et sortir du dispositif. La surface d'acquisition 1003 est ainsi une interface entre un premier milieu (correspondant au prisme) d'un deuxième milieu (correspondant à l'air ou au doigt de l'utilisateur).

Les différents rayons lumineux du faisceau d'éclairage divergent de manière répartie autour d'un axe d'éclairage principal qui présente un angle avec la normale à la surface d'acquisition faible, de 0° dans le cas de la figure 1. La divergence des rayons lumineux autour de l'axe d'éclairage principal est telle que l'ensemble de la surface d'acquisition 1003 est éclairée. La divergence est par exemple de 20° au maximum.

Les rayons émis par le système d'éclairage 1001 sont réfractés par la petite base et forment ainsi un angle avec la normale à la grande base inférieur à un angle critique $\theta_c$, l'angle critique $\theta_c$ étant défini comme l'angle au-delà duquel le phénomène de réflexion totale se produit lorsqu'un rayon atteint une interface entre un premier milieu qui est le prisme et un deuxième milieu qui est l'air.

Ainsi, la majorité des rayons traversent la surface d'acquisition 1003, que le milieu extérieur soit l'air ou le doigt, puisque le doigt a un indice supérieure à l'air, lorsque le doigt est apposé sur la surface d'acquisition.

Quand le doigt est posé sur la surface d'acquisition 1003, les rayons générés par le système d'éclairage 1001 et frappant la surface d'acquisition ne sont donc pas réfléchis totalement par cette surface et éclairent le doigt. Les rayons sont alors diffusés à l'intérieur du doigt et réémis dans toutes les directions avec la même intensité lumineuse : le doigt se comporte comme une surface lambertienne ou encore de manière isotrope. Cependant la caméra 1002 est agencée de sorte qu'elle ne peut recevoir que des rayons lumineux formant un angle vis-à-vis de la normale à la grande base supérieur à l'angle critique $\theta_c$. Elle est aussi agencée pour ne recevoir que des rayons formant un angle avec la normale à la surface d'acquisition 1003 inférieur à un angle limite $\theta_l$ l'angle critique $\theta_l$ étant défini comme l'angle au-delà duquel le phénomène de réflexion totale se produit lorsqu'un rayon atteint une interface entre un premier milieu qui est le prisme et un deuxième milieu qui est le doigt.

En conséquence, les rayons lumineux diffusés par le doigt et ressortant du doigt au niveau des vallées ne peuvent pas atteindre la caméra 1002 car, comme ils traversent la couche d'air les séparant de la surface d'acquisition puis sont réfractés par cette dite surface, ils se propagent nécessairement dans le prisme en formant un angle par rapport à la normale à cette dite surface inférieur à l'angle critique $\theta_c$.

En revanche, les rayons diffusés par le doigt et ressortant du doigt au niveau des crêtes du doigt en contact avec la surface d'acquisition 1003 peuvent se propager dans le prisme avec n'importe quel angle par rapport à la normale à la surface d'acquisition 1003 inférieur à $\theta_l$. Il existe donc des rayons émis par le doigt se propageant dans le prisme à des angles par rapport à la normale à la surface d'acquisition 1003 supérieurs à $\theta_c$ qui peuvent être imagés par la caméra.

En conséquence, la caméra 1002 forme une image de l'empreinte digitale à fort contraste entre les vallées et les crêtes puisque :

- les crêtes de l'image correspondent à des rayons lumineux diffusés par le doigt qui sont ressortis du doigt au niveau des crêtes en contact avec la surface d'acquisition 1003 pour atteindre la caméra, et
- les rayons lumineux diffusés par le doigt qui sont ressortis du doigt au niveau des vallées n'ont pas pu atteindre la caméra.

Les crêtes apparaissent donc plus claires dans l'image d'empreinte que les vallées.

Un tel dispositif est dit « à réflexion totale frustrée » du fait de la position relative entre la caméra 1002 et la grande base impliquant que la caméra observe la surface d'acquisition en condition de réflexion totale en l'absence de doigt en contact avec la surface d'acquisition : en effet tout rayon atteignant la caméra depuis la surface d'acquisition a déjà subi une réflexion à la surface d'acquisition 1003 et se propageait donc déjà dans le prisme avant cette réflexion mais aucun rayon ne peut traverser la surface d'acquisition et atteindre la caméra du fait du contact de l'air avec la surface d'acquisition 1003. Lorsque le doigt touche la surface d'acquisition 1003, la condition selon laquelle la caméra observe la surface d'acquisition 1003 en réflexion totale n'est toutefois temporairement plus respectée, puisque des rayons peuvent passer du doigt vers la caméra, d'où le terme de « réflexion totale frustrée ».

Malheureusement ce type de dispositif reste sensible aux salissures et rayures sur la surface d'acquisition. En effet, certains des rayons lumineux provenant du système d'éclairage peuvent être diffusés par ces salissures et se propager alors avec un angle par rapport à la normale à la surface d'acquisition 1003 supérieure à l'angle critique $\theta_c$ et atteindre la caméra.

Le cheminement des rayons peut alors se modéliser par une réflexion et une diffusion anisotrope.

Celle-ci peut se modéliser par exemple par la fonction de phase de Henyey-Greenstein .

La probabilité que l'angle entre le rayon géométrique réfléchi et le rayon réel soit $\theta$ est :

$$P(\mu) = \frac{\frac{1}{4\pi}(1-g^2)}{(1+g^2-2g\mu)^{\frac{3}{2}}}, \quad \text{avec} \quad \mu = \cos(\theta),$$

Où $g$ est le coefficient d'anisotropie, supérieur à 0 et inférieur à 1. Pour des faibles salissures, il sera proche de 1 et diminuera avec la quantité de dépôt à la surface.

Expérimentalement, une valeur toujours supérieure à 0.5 a été observée.

Ceci aboutit à un profil d'énergie décroissant lorsque l'on s'éloigne de la condition géométrique de réflexion. Ceci est particulièrement gênant lorsque les salissures proviennent de traces laissées par un doigt apposé précédemment sur la surface, car une image similaire à l'image de ce doigt peut apparaître.

Dès lors, il a été envisagé d'augmenter les seuils de détection du dispositif afin que le dispositif ne prenne pas en compte les traces d'empreintes digitales laissées par les précédents candidats.

Malheureusement, il arrive alors que le dispositif ne prenne pas non plus en compte une empreinte réelle d'un nouveau candidat apposant son doigt sur la surface d'acquisition. C'est par exemple le cas si l'utilisateur appose un « doigt sec » (plus connu sous le terme anglais de « dry finger »), c'est-à-dire un doigt pour lequel le couplage optique est limité et une fraction seulement des rayons émis par le doigt traverse la surface d'acquisition. US2005/271258A1 fait partie de l'art antérieur.

OBJET DE L'INVENTION

Un but de l'invention est de fournir un dispositif de capture biométrique permettant de différencier plus facilement une empreinte réelle d'un candidat à l'authentification vis-à-vis d'empreintes résiduelles restant sur la surface d'acquisition.

RESUME DE L'INVENTION

En vue de la réalisation de ce but, on propose, selon l'invention, un dispositif de capture biométrique comprenant :

- un bloc optique intégrant une surface d'acquisition sur laquelle un utilisateur pose en service au moins une partie corporelle portant au moins une empreinte,
- un système d'acquisition optique configuré pour acquérir au moins une image d'au moins une empreinte de ladite partie corporelle à travers au moins une face du bloc dit face de sortie, le système optique étant agencé de sorte qu'un premier rayon lumineux se propageant, hors du bloc optique, le long d'un axe optique dudit système d'acquisition optique forme, au niveau de la surface d'acquisition, un angle par rapport à une normale à la surface d'acquisition d'une valeur supérieure à un angle critique dépendant des indices de réfraction du bloc optique et de l'air, le système optique étant par ailleurs agencé de sorte que l'axe optique forme un angle par rapport à une normale à la face de sortie inférieur audit angle critique,
- un système d'éclairage configuré pour permettre un éclairage de la surface d'acquisition, le système d'éclairage générant un faisceau lumineux défini par un axe d'éclairage,

un deuxième rayon lumineux se propageant selon l'axe d'éclairage hors du bloc optique, se propage ensuite dans le bloc optique pour former un rayon incident donné au niveau de la surface d'acquisition, rayon incident donné qui se réfléchit sur la surface d'acquisition pour définir ainsi un rayon réfléchi donné,
le système d'éclairage et le système d'acquisition optique étant agencés de sorte qu'un angle $\Omega$ entre :

- le rayon réfléchi, si le rayon réfléchi appartient à un plan défini par la normale à la surface d'acquisition et le premier rayon, ou la projection du rayon réfléchi dans ledit plan dans le cas contraire, et
- le premier rayon

soit strictement supérieur à l'angle $\beta$.

Ainsi en service, le faisceau lumineux généré par le système d'éclairage traverse au moins l'une des faces du bloc optique jusqu'à atteindre la surface d'acquisition. Quand la partie corporelle est posée sur la surface d'acquisition, la fraction des rayons lumineux du faisceau lumineux (s'étendant selon l'axe d'éclairage ou parallèlement à celui-ci lorsqu'ils se propagent hors du bloc optique) et frappant la surface d'acquisition à l'endroit où la partie corporelle est apposée, et qui sont réfléchis par ladite surface d'acquisition, n'atteignent pas le système d'acquisition optique du fait que ces rayons se dirigent à l'opposé de la face de sortie grâce à l'agencement particulier entre le système d'éclairage et le système d'acquisition optique.

Par ailleurs, les rayons lumineux (s'étendant selon l'axe d'éclairage ou parallèlement à celui-ci lorsqu'ils se propagent hors du bloc optique) et frappant la surface d'acquisition à l'endroit où les crêtes de la partie corporelle sont apposées, et/ou les rayons lumineux traversant la surface d'acquisition à l'endroit où les vallées sont apposées et atteignant ainsi le doigt, vont être diffusés de manière isotrope par ladite partie corporelle.

Cependant du fait de la position particulière du système d'acquisition optique, ledit système ne peut recevoir que les rayons lumineux formant un angle incident vis-à-vis de la normale à la surface d'acquisition supérieur à l'angle critique $\theta_c$. En conséquence, les rayons lumineux diffusés par la partie corporelle et ressortant de la partie corporelle au niveau des vallées ne peuvent normalement pas atteindre le système d'acquisition optique car ils ne peuvent normalement pas traverser la couche d'air les séparant de la surface d'acquisition et ensuite se propager dans le bloc optique tout en formant un angle incident par rapport à la normale à la surface d'acquisition supérieur à l'angle critique $\theta_c$.

Ainsi, seuls les rayons lumineux diffusés par la partie corporelle et ressortant du doigt au niveau des crêtes peuvent normalement atteindre, pour au moins une partie d'entre eux, le système d'acquisition optique.

Le système d'acquisition optique forme en conséquence une image de l'empreinte à fort contraste entre les vallées et les crêtes puisque :

- les crêtes de l'image correspondent à des rayons lumineux diffusés par la partie corporelle qui sont ressortis de la partie corporelle, au niveau des crêtes de ladite partie corporelle qui sont en contact avec la surface d'acquisition, pour atteindre le système d'acquisition optique, et
- les rayons lumineux diffusés par la partie corporelle qui sont ressortis de la partie corporelle au niveau des vallées n'ont pas pu atteindre normalement le système d'acquisition optique.

Les crêtes apparaissant donc plus claires que les vallées sur les images.

L'invention permet ainsi d'acquérir une image d'empreinte de bonne qualité.

La diffusion des rayons par la partie corporelle étant isotrope, l'agencement particulier du système d'éclairage par rapport aux positionnements des systèmes d'éclairage de l'art antérieur ne modifie pas la diffusion des rayons lumineux par la partie corporelle et par conséquent ne modifie pas la quantité de lumière diffusée par la partie corporelle et atteignant sur le système d'acquisition optique.

En revanche, dans le cas d'une empreinte résiduelle, les rayons lumineux diffusés par les salissures laissées sur la surface d'acquisition vont être diffusés de manière non isotrope.

En effet, l'angle $\Omega$ est supérieur dans l'invention à celui des dispositifs de l'état de l'art du fait de l'agencement particulier entre le système d'acquisition optique et le système d'éclairage. Or la diffusion non isotrope par une salissure laissée sur la surface d'acquisition suit un profil d'énergie décroissant rapidement lorsque l'on s'éloigne de la réflexion géométrique (dans le cas présent du rayon réfléchi donné, ou sa projection) : en conséquence l'intensité des rayons lumineux diffusés par la partie corporelle vers le système d'acquisition optique est réduite dans l'invention vis-à-vis des dispositifs de l'art antérieur. Ainsi dans une image donnée, l'intensité lumineuse des points correspondant aux crêtes d'une partie corporelle apposée sur la surface d'acquisition n'est pas modifiée dans l'invention vis-à-vis des dispositifs de l'art antérieur, tandis que l'intensité lumineuse des points correspondant aux traces résiduelles présentes sur la surface d'acquisition est réduite dans l'invention vis-à-vis des dispositifs de l'art antérieur.

En conséquence, l'invention ne sera pas ou peu sensible à une empreinte résiduelle lors d'une demande de capture du fait qu'elle ne va recevoir que des rayons lumineux de très faible intensité en provenance de celle-ci.

Un simple seuil sur le niveau de détection de l'invention permet de supprimer les traces résiduelles sans altérer les images des parties corporelles apposées sur la surface d'acquisition.

L'invention permet ainsi différencier plus facilement les empreintes résiduelles d'une empreinte réelle d'un candidat à l'authentification en s'appuyant avantageusement sur les propriétés optiques différentes d'une empreinte résiduelle et d'une empreinte réelle (le corps humain étant très diffusant, il est peu sensible à la direction avec laquelle les rayons lumineux viennent le frapper au contraire d'une empreinte résiduelle bien plus fine) ainsi que le principe de la réflexion totale et plus particulièrement le principe de la réflexion totale frustrée.

L'invention propose ainsi une solution simple pour permettre au dispositif d'acquisition biométrique de mieux différencier empreintes résiduelles et empreintes réelles, en particulier de rendre les empreintes résiduelles moins visibles dans les images.

En outre, l'invention peut être implémentée dans des boitiers de l'art antérieur sans avoir à modifier le système d'acquisition optique généralement complexe, mais seulement en agissant sur le système d'éclairage afin qu'il éclaire la surface d'acquisition avec un angle par rapport à la normale à cette dite surface tel que l'angle $\Omega$ soit supérieur à l'angle $\beta$.

On note que le système d'éclairage est tel que le rayon incident donné est incliné vis-à-vis de la normale à la surface d'acquisition c'est-à-dire que le rayon incident donné est strictement supérieur à zéro degrés et strictement inférieur à 90 degrés.

On note que le système d'acquisition optique est tel que le premier rayon est incliné vis-à-vis de la normale à la surface d'acquisition c'est-à-dire que le premier rayon est strictement supérieur à zéro degrés et strictement inférieur à 90 degrés.

Par « surface d'acquisition » on entend la portion d'un dispositif avec laquelle un candidat à la reconnaissance biométrique va interagir pour assurer la prise d'image. Au moins une partie de la surface du bloc optique peut former directement ladite surface d'acquisition ou bien être recouverte d'un traitement et/ou d'un élément dédié formant alors conjointement avec ladite partie de la surface du bloc optique ladite surface d'acquisition.

Le plus souvent la surface d'acquisition correspond à seulement une partie de la surface du bloc d'acquisition (recouverte ou non d'un traitement et/ou d'un élément dédié). Par exemple une face supérieure du bloc d'acquisition peut être recouverte d'un bâti comprenant une fenêtre : l'intérieur de la fenêtre délimitera la surface d'acquisition qui sera ainsi formée d'une portion seulement de la face supérieure du bloc optique.

On note par ailleurs que le rayon réfléchi donné peut également être appelé symétrique du rayon incident donné par rapport à la normale à la surface d'acquisition.

On note par ailleurs que le rayon réfléchi donné n'est pas nécessairement une réflexion totale du rayon incident donné mais peut être une réflexion simplement partielle du rayon incident donné.

Par « axe optique » on entend l'axe autour duquel est centré le champ de vision (ou « field of view » en anglais) du système d'acquisition optique.

Par « axe d'éclairage » on entend l'axe autour duquel divergent de manière répartie les rayons lumineux du faisceau lumineux généré par le système d'éclairage. Ledit axe d'éclairage peut ainsi être la génératrice du faisceau lorsque celui-ci prend la forme d'un cylindre droit ou bien la hauteur du faisceau lorsque celui-ci prend la forme d'un cône. Pour toute autre forme de faisceau, on pourra considérer la direction d'intensité maximale du faisceau lumineux.

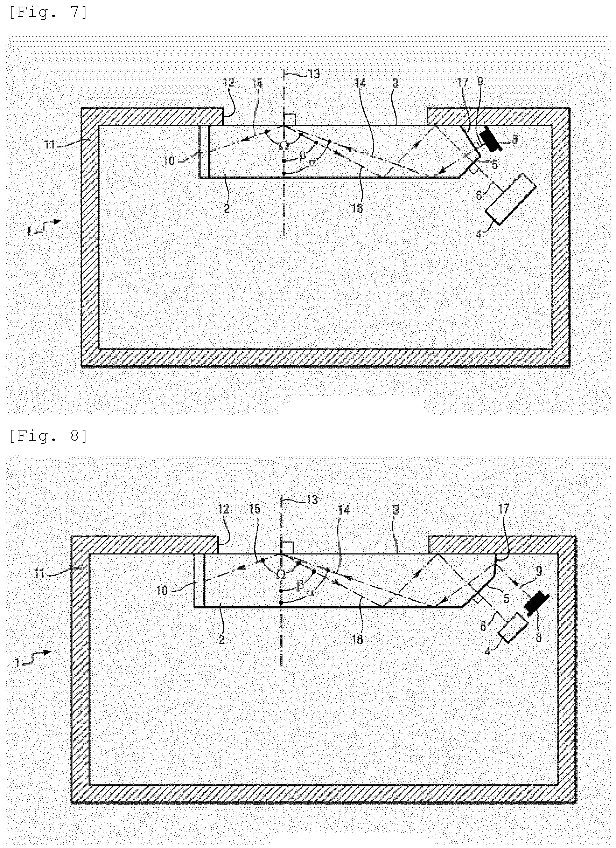

Pour la présente demande, les angles en liaison avec le système d'éclairage sont considérés au point d'impact sur la surface d'acquisition d'un rayon lumineux donné généré par ledit système d'éclairage c'est-à-dire une fois que ledit rayon s'est propagé dans le bloc optique (sauf lorsque l'on parle d'une autre surface que la surface d'acquisition comme par exemple la surface du bloc optique à travers laquelle le faisceau lumineux pénètre dans le bloc optique). Ainsi si l'on considère la figure 7 qui sera décrite plus en détails ci-dessous, l'angle α est considéré au niveau du point d'impact d'un rayon donné et non pas directement au niveau du système d'éclairage avant propagation dudit rayon dans le bloc optique. En conséquence quand on considère la surface d'acquisition on parlera du rayon incident donné plutôt que de l'axe d'éclairage du système d'éclairage qui peut par exemple subir une légère réfraction à l'entrée du bloc optique.

De même, les angles en liaison avec le système d'acquisition optique sont considérés au niveau de la surface d'acquisition c'est-à-dire avant que le rayon considéré ne se propage dans le bloc optique pour atteindre le système d'acquisition optique (sauf lorsque l'on parle d'une autre surface que la surface d'acquisition comme par exemple la face de sortie). Ainsi si l'on considère la figure 7 qui sera décrite plus en détails ci-dessous, l'angle β est considéré au niveau de la surface d'acquisition et non pas directement au niveau du système d'acquisition optique après propagation dudit rayon dans le bloc optique. En conséquence quand on considère la surface d'acquisition on parlera du premier rayon plutôt que de l'axe optique du système optique. Pour la présente demande, les angles sont à considérer dans un plan défini par le premier rayon et la normale à la surface d'acquisition : les angles sont ainsi définis soit par des rayons appartenant audit plan soit par des projections de rayons dans ledit plan.

Par ailleurs, on rappelle que la surface d'acquisition sépare un premier milieu (correspondant au bloc optique) d'un deuxième milieu (correspondant à l'air ou à la peau).

Par la suite, on entend ainsi par « angle critique $\theta_c$ » l'angle au-delà duquel la réflexion totale se produit lorsqu'un rayon lumineux incident arrivant par le premier milieu atteint la surface d'acquisition quand le deuxième milieu est l'air. L'angle critique est donné par la formule suivante :

$$\theta_c = \arcsin(\frac{n_0}{n_1})$$

$n_1$ étant l'indice de réfraction du bloc optique et $n_0$ étant l'indice de réfraction de l'air. En conséquence pour un indice de réfraction de l'air égal à 1 et un indice de réfraction du bloc optique égal par exemple à 1.5, on obtient un angle critique $\theta_c$ de 41.8 degrés.

Par « angle limite $\theta_l$ », on entend l'angle au-delà duquel la réflexion totale se produit lorsqu'un rayon lumineux incident arrivant par le premier milieu atteint la surface d'acquisition quand le deuxième milieu est la peau.

L'angle limite est donné par la formule suivante :

$$\theta_l = \arcsin(\frac{n_2}{n_1})$$

$n_1$ étant l'indice de réfraction du bloc optique et $n_2$ étant l'indice de réfraction de la peau. L'indice de réfraction de la peau humaine est, dans le domaine du visible, compris entre 1,41 et 1,47. En considérant la valeur minimale de 1,41, on obtient donc un angle limite $\theta_1$ de 70 degrés. En considérant la valeur maximale, on obtient un angle limite $\theta_1$ de 76 degrés.

Optionnellement, la face de sortie est une face latérale du bloc optique.

Optionnellement, le système optique est agencé de sorte que son axe optique forme un angle par rapport à la normale à la face de sortie inférieur à deux degrés et préférentiellement inférieur à un degré et soit préférentiellement égal à zéro degré.

Optionnellement, l'angle $\Omega$ est supérieur à 60 degrés (°) et préférentiellement supérieur à 70° et préférentiellement supérieur à 90°.

Optionnellement, l'angle $\Omega$ est inférieur à $2\beta$.

Optionnellement, l'angle $\Omega$ est supérieur à 70° et inférieur à $2\beta$.

Optionnellement, l'angle $\Omega$ est supérieur à 90° et supérieur à $2\beta$.

Optionnellement, le système d'éclairage et le système d'acquisition optique sont agencés de sorte qu'un angle $\gamma$ entre le premier rayon et le rayon incident donné soit strictement inférieur à $\beta$.

Optionnellement l'angle $\gamma$ est inférieur à 35 degrés et de préférence inférieur à 25 degrés et de préférence inférieur à 15 degrés et de préférence inférieur à 10°.

Optionnellement, le rayon incident donné forme un angle par rapport à la normale à la surface d'acquisition d'une valeur supérieure à l'angle critique et inférieure à un angle limite dépendant des indices de réfraction du bloc et de la peau.

Optionnellement l'angle entre le rayon incident donné et la normale à la surface d'acquisition est supérieur à $\beta$.

Optionnellement le dispositif comporte un unique système d'éclairage et/ou un unique système d'acquisition optique.

Optionnellement, le système d'éclairage et le système d'acquisition optique sont portés par des supports s'étendant dans des plans confondus ou parallèles.

Optionnellement le bloc optique est conformé en un prisme.

Optionnellement le bloc optique est conformé en une lame :

- à faces parallèles, avec une face latérale inclinée au moins en partie ou
- mince avec une pluralité de micro-prismes en face inférieure.

Le recours à une lame permet d'avoir un dispositif plus compact.

En effet une lame est de hauteur inférieure à un prisme, en particulier du fait que la face de sortie d'une lame est plus près du système d'acquisition que dans un prisme ce qui permet à la face de sortie d'être plus petite.

Optionnellement le dispositif comporte au moins une zone traitée pour absorber des rayons lumineux émis par le système d'éclairage et réfléchis au niveau de la surface d'acquisition.

Optionnellement ladite zone est traitée en étant habillée d'un revêtement de couleur sombre.

Optionnellement le système d'acquisition optique et le système d'éclairage sont à proximité l'un de l'autre. Optionnellement le système d'éclairage éclaire à travers la face de sortie.

Optionnellement le système d'éclairage éclaire à travers une face du bloc optique adjacente à la face de sortie. Par « face adjacente » on entend une face du bloc optique ayant au moins une arête commune avec la face de sortie. D'autres caractéristiques et avantages de l'invention ressortiront à la lecture de la description qui suit de modes de réalisation particuliers non limitatifs de l'invention.

BREVE DESCRIPTION DES DESSINS

La figure 1 a déjà été décrite en relation avec l'art antérieur de l'invention : la figure 1 est une vue en coupe schématique d'un dispositif de l'art antérieur qui ne fait pas partie de l'invention.

L'invention sera mieux comprise à la lumière de la description qui suit en référence aux figures annexées parmi lesquelles :

- la figure 2 est une vue en coupe schématique d'un dispositif selon un premier mode de réalisation de l'invention,
- la figure 3 est une vue en coupe schématique d'un dispositif selon un deuxième mode de réalisation de l'invention,
- la figure 4 est une vue en coupe schématique d'un dispositif selon un troisième mode de réalisation de l'invention,
- la figure 5 est une vue en coupe schématique d'un dispositif selon un quatrième mode de réalisation de l'invention,
- la figure 6 est une vue en coupe schématique d'un dispositif selon un cinquième mode de réalisation de l'invention,
- la figure 7 est une vue en coupe schématique d'un dispositif selon un sixième mode de réalisation de l'invention,
- la figure 8 est une vue en coupe schématique d'un dispositif selon un septième mode de réalisation de l'invention.

DESCRIPTION DETAILLEE DE L'INVENTION

En référence à la figure 2, selon un premier mode de réalisation, le dispositif de capture biométrique, généralement désigné par 1, est un dispositif de capture pour l'acquisition d'une empreinte d'un doigt en vue d'opérer une reconnaissance biométrique.

Cette application n'est cependant pas limitative et l'on pourra employer le dispositif 1 pour la prise de capture d'une empreinte d'une autre partie corporelle et par exemple de plusieurs doigts, d'une main entière, d'une paume de main ...

Le dispositif 1 comporte un bloc optique 2 présentant :

- une face supérieure,
- une face inférieure parallèle à la face supérieure, et
- au moins une face latérale reliant la face supérieure à la face inférieure.

Le bloc optique 2 est ici en un matériau transparent à la lumière visible, par exemple, du verre ou du plastique comme par exemple du polycarbonate (PC) ou du poly(méthacrylate de méthyle) (PMMA). Le bloc optique 2 présente un indice de réfraction supérieur à l'indice de réfraction de l'air et optionnellement supérieur à l'indice de réfraction de la peau.

De manière particulière, le bloc optique 2 est ici conformé en un prisme. Le bloc optique 2 est par exemple un prisme à quatre faces latérales. Le bloc optique 2 est par exemple un tronc de pyramide de sorte à comprendre une grande base (la face supérieure) et une petite base (la face inférieure).

Dans le cas présent, une portion seulement de la face supérieure forme une surface d'acquisition 3 sur laquelle un candidat à la reconnaissance biométrique pose un doigt. Optionnellement le bloc optique 2 est encadré en partie d'un bâti 11 comprenant une fenêtre 12 : l'intérieur de la fenêtre délimite la surface d'acquisition 3.

La surface d'acquisition 3 est plane.

Par la suite, les angles sont à considérer en l'absence de partie corporelle posée sur la surface d'acquisition.

Par ailleurs, le dispositif 1 comporte également un système d'acquisition optique 4 configuré pour capturer au moins une image d'une empreinte du doigt d'un candidat à la reconnaissance biométrique apposé sur La surface d'acquisition 3.

Dans le cas présent, le système d'acquisition optique 4 est l'unique système d'acquisition optique du dispositif 1.

Le système d'acquisition optique 4 comporte par exemple au moins un capteur optique, tel qu'une caméra sensible ici au rayonnement lumineux du domaine visible, et optionnellement un ou plusieurs éléments optiques additionnels tels qu'une ou des lentilles et un diaphragme.

Dans le cas présent, le système d'acquisition optique 4, et donc le dispositif 1, comporte un unique capteur optique.

Le système d'acquisition optique 4 est optionnellement agencé pour acquérir la ou les images à travers une première des faces latérales du bloc optique 2 appelée par la suite face de sortie 5. La face de sortie 5 est donc inclinée vis-à-vis de la face supérieure associée à la surface d'acquisition 3.

Dans le cas présent, le système d'acquisition optique 4 est matériellement agencé hors du bloc optique derrière ladite face de sortie 5 de sorte que son champ de vision (ou « field of view » en anglais) soit directement orienté vers la face de sortie 5.

Le champ de vision du système d'acquisition optique 4 est défini par un axe optique 6. On retient donc ici que l'axe optique 6 est dirigé vers la surface d'acquisition et incliné vis-à-vis d'une normale 13 à la surface d'acquisition 3 (i.e. ni parallèle ni orthogonale à celle-ci).

Préférentiellement, l'axe optique 6 forme une normale à la face de sortie 5. L'axe optique forme donc un angle par rapport à la normale à la face de sortie 5 inférieur à l'angle critique $\theta_c$.

Le système d'acquisition optique 4 est par ailleurs agencé de sorte qu'un premier rayon partant de la surface d'acquisition et l'atteignant en se propageant selon l'axe optique 6 forme un angle $\beta$ par rapport à une normale 13 à la surface d'acquisition 3 qui est supérieur à l'angle critique $\theta_c$ (mais inférieur à l'angle limite $\theta_1$) de sorte que, lorsqu'il y a de l'air au-dessus de la surface d'acquisition 3, aucun rayon provenant de l'extérieur du bloc optique 2 ne puise traverser la surface d'acquisition 3 et se diriger vers le système d'acquisition 4. Dans le cas présent, du fait que l'axe optique 6 est orthogonal à la face de sortie 5 et qu'il soit dirigée vers la surface d'acquisition 3, on a directement le premier rayon confondu avec l'axe optique 6 même lors de sa propagation dans le bloc optique 2. Par la suite on parlera donc uniquement de l'axe optique pour le présent premier mode de réalisation.

Par ailleurs, le dispositif 1 comporte un système d'éclairage 8.

Dans l'exemple illustré, le système d'éclairage 8 est l'unique système d'éclairage 8 du dispositif 1.

Le système d'éclairage 8 comporte au moins une source lumineuse agencée pour émettre un rayonnement lumineux dans le domaine visible.

En remplacement ou en complément, le système d'éclairage 8 et le système d'acquisition optique peuvent travailler dans d'autres plages de longueurs d'ondes et par exemple dans le proche infrarouge proche (i.e. avec une longueur d'onde inférieure à 1.1 micromètres) ou l'ultraviolet si tant est que bloc optique soit transparent à ces longueurs d'ondes. La au moins une source lumineuse du système d'éclairage 8 est composée d'une ou de plusieurs diodes électroluminescentes (DELs) et/ou d'une ou plusieurs diodes supraluminescentes (plus connus sous la désignation anglaise Super Luminescent Diodes ou SLD) et/ou une ou plusieurs diodes lasers.

Dans le cas présent, le système d'éclairage 8 (et donc le dispositif 1) se limite à une unique source lumineuse. Dans le cas présent, la source lumineuse (et donc le système d'éclairage 8 et donc le dispositif 1) est composée d'une unique DEL.

Le système d'éclairage 8 comporte en conséquence ici un unique axe d'éclairage 9 qui est celui de la DEL. Dans le cas présent, le système d'éclairage 8 est apte à générer un faisceau lumineux divergeant autour de l'axe d'éclairage, faisceau lumineux dirigé vers la surface d'acquisition 3. La divergence est telle que l'ensemble de la surface d'acquisition 3 est éclairée. La divergence est par exemple de 20° au maximum.

Le système d'éclairage 8 est ici agencé pour éclairer à travers la face de sortie 5. Dans le cas présent, le système d'éclairage 8 est matériellement agencé hors du bloc optique 2 derrière ladite face de sortie 5 de sorte que le faisceau lumineux qu'il génère soit directement orienté vers la face de sortie 5. Par ailleurs, l'axe d'éclairage 9 est incliné par rapport à la face de sortie 5. En conséquence les rayons lumineux, formant le faisceau lumineux, sont réfractés par cette dite face.

En conséquence un rayon lumineux qui se propage selon l'axe d'éclairage 9, se propage ensuite dans le bloc optique 2 pour former un rayon incident donné 14 au niveau de la surface d'acquisition 3 qui n'est pas confondu avec l'axe d'éclairage 9. Le rayon incident donné 14 forme un angle $\alpha$ avec la normale 13.

Le rayon incident donné 14 se réfléchit sur la surface d'acquisition 3 définissant ainsi un rayon réfléchi donné 15. Le système d'éclairage 8 et le système d'acquisition optique 4 sont par ailleurs agencés de sorte qu'un angle $\Omega$ entre le rayon réfléchi donné 15 et l'axe optique 6 soit strictement supérieur à l'angle $\beta$.

Dans le cas présent l'angle $\Omega$ est supérieur à 60 degrés et est ici supérieur à 70 degrés. L'angle $\Omega$ est par exemple de 75 degrés.

Dans le cas présent, l'angle $\Omega$ est inférieur à 2$\beta$. $\beta$ est en effet égal à 45 degrés dans le cas présent.

Le système d'éclairage 8 est agencé à proximité du système d'acquisition optique 4.

Le système d'éclairage 8 est agencé sous le système d'acquisition optique 4. Le système d'éclairage 8 n'est par conséquent pas orienté vers le système d'acquisition optique 4. En réalité, le système d'éclairage 8 et le système d'acquisition optique 4 sont globalement orientés dans la même direction et dans un même sens. Optionnellement, le système d'éclairage 8 et le système d'acquisition optique 4 sont agencés de sorte qu'un angle $\gamma$ entre l'axe optique 6 et le rayon incident donné 14 soit strictement inférieur à $\beta$.

Optionnellement l'angle $\gamma$ est inférieur à 35 degrés et de préférence inférieur à 25 degrés. Dans le cas présent on prend par exemple $\gamma$ égal à 15 degrés ($\alpha$ étant pris égal à 30 degrés).

Le système d'éclairage 8 est ici agencé de sorte que l'angle $\alpha$ soit inférieur à l'angle $\beta$.

e système d'éclairage 8 est ainsi agencé ici de sorte que l'angle $\alpha$ soit inférieur à l'angle critique $\theta_c$.

Par ailleurs, le bloc optique 2 comprend au moins une zone 10 traitée pour absorber des rayons lumineux émis par le système d'éclairage 8 et réfléchis au niveau de la surface d'acquisition 3.

Par exemple ladite zone 10 est habillée d'un revêtement (directement en étant teintée dans la masse et/ou indirectement par recouvrement d'un côté externe et/ou interne d'au moins une portion d'au moins l'une des faces du bloc optique 2 : la zone 10 traitée peut ainsi être agencée à l'extérieur et/ou à l'intérieur du bloc optique 2) absorbant au moins 95% des rayons lumineux, et de préférence au moins 98% des rayons lumineux, arrivant sur ladite zone. Le revêtement est par exemple un revêtement de couleur sombre (i.e. un revêtement de couleur absorbant au moins 95% des rayons, et de préférence au moins 98% des rayons) et par exemple de couleur noire. Optionnellement ladite zone 10 est agencée sur au moins l'une des faces latérales du bloc optique 2 et de préférence ici la face latérale opposée à la face de sortie 5. De préférence ladite zone 10 s'étend sur au moins toute ladite face latérale opposée à la face de sortie 5.

Le système d'éclairage 8 est ici agencé de sorte que l'ensemble des rayons émis par le système d'éclairage 8, et subissant une réflexion sur la surface d'acquisition 3, finissent, après un nombre quelconque de réflexions sur les faces du bloc optique 2, par atteindre la zone 10.

On a ainsi décrit un dispositif 1 qui possède un angle $\Omega$ de 75° : avec un facteur d'anisotropie g supérieur à 0.6, l'atténuation de l'intensité lumineuse des rayons lumineux diffusés par les empreintes résiduelles grâce au dispositif 1 est supérieure à un facteur 3 vis-à-vis d'un dispositif de l'art antérieur comme celui illustré à la figure 1. Par exemple pour un facteur d'anisotropie g de 0.7, l'atténuation est 5 fois supérieure avec le dispositif 1 qu'avec le dispositif de l'art antérieur illustré à la figure 1.

Bien entendu le dispositif 1 illustré à la figure 1 n'est que l'un des nombreux agencements possibles pour mettre en œuvre l'invention.

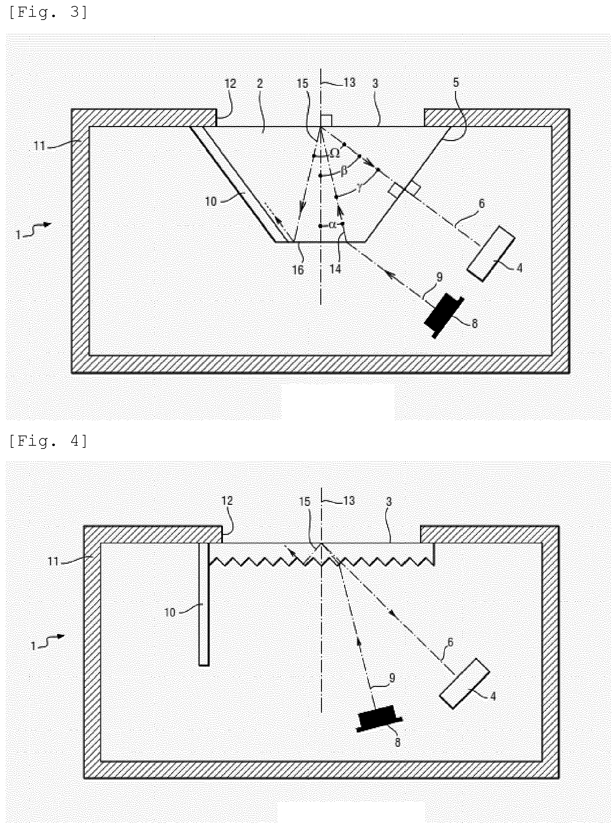

La figure 3 illustre ainsi un autre agencement qui est identique à celui de la figure 2 à la différence qu'au lieu d'éclairer par la face de sortie 5, le système d'éclairage 8 éclaire à travers une face du bloc optique adjacente à ladite face de sortie 5. Dans le cas présent, le système d'éclairage 8 éclaire à travers la face inférieure 16.

Le reste de ce qui a été dit pour le premier mode de réalisation est donc également applicable au deuxième mode de réalisation en particulier en ce qui concerne les angles $\alpha$, $\beta$, $\gamma$ et $\Omega$.

Par ailleurs, on agence ici astucieusement le système d'éclairage 8 de sorte que son axe d'éclairage 9 soit parallèle à l'axe optique 6.

De préférence, le système d'éclairage 8 et le système d'acquisition optique 4 sont en outre agencés de sorte que leurs bases respectives s'étendent dans un même plan. Typiquement, le système d'éclairage 8 et le système d'acquisition optique 4 sont montés sur un même support ou sur deux supports distincts mais parallèles entre eux, et optionnellement s'étendant dans un même plan.

La figure 4 illustre ainsi un autre agencement qui est identique à celui de la figure 2 mis à part au niveau du bloc optique 2.

Le bloc optique 2 est ainsi une lame dite lame mince présentant :

- une face supérieure,
- une face inférieure parallèle à la face supérieure, et
- au moins une face latérale reliant la face supérieure à la face inférieure (au moins une face latérale reliant la face supérieure à la face inférieure étant orthogonale à la face inférieure et à la face supérieure).

Le bloc optique 2 est ici en un matériau transparent à la lumière visible, par exemple, du verre ou du plastique comme par exemple du polycarbonate (PC) ou du poly(méthacrylate de méthyle) (PMMA). Le bloc optique 2 présente un indice de réfraction supérieur à l'indice de réfraction de l'air et optionnellement supérieur à l'indice de réfraction de la peau.

Dans le cas présent, une portion seulement de la face supérieure forme une surface d'acquisition 3 sur laquelle un candidat à la reconnaissance biométrique pose un doigt. Optionnellement le bloc optique 2 est encadré en partie d'un bâti 11 comprenant une fenêtre 12 : l'intérieur de la fenêtre délimite la surface d'acquisition 3.

La surface d'acquisition 3 est plane.

En revanche, la face inférieure 16 du bloc optique 2 n'est pas plane mais présente une pluralité de micro-prismes côté externe au bloc optique.

Il n'existe donc plus une unique face de sortie et une unique face à travers laquelle éclaire le système d'éclairage 8 mais une multitude de faces de sortie et une multitude de faces à travers lesquelles éclaire le système d'éclairage 8.

Toutefois, étant donné la structure particulière d'une lame mince à micro-prisme, le comportement des rayons lumineux sera le même que pour le premier mode de réalisation si l'on se place individuellement au niveau de chaque face de sortie de l'un des micro-prismes donné. Le reste de ce qui a été dit pour le premier mode de réalisation est en conséquence également applicable au troisième mode de réalisation en particulier en ce qui concerne les angles α, β, γ et Ω.

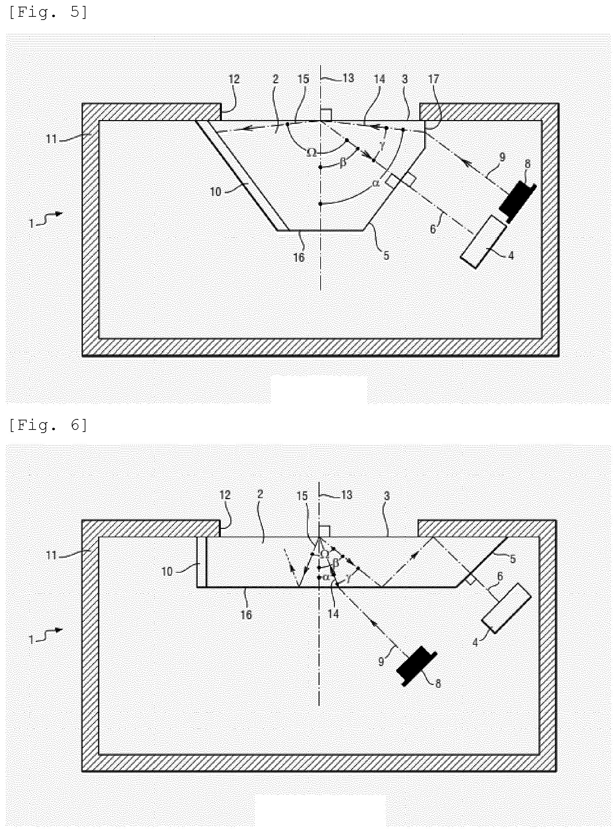

En référence à la figure 5, selon un quatrième mode de réalisation, le dispositif de capture biométrique, généralement désigné par 1, est un dispositif de capture pour l'acquisition d'une empreinte d'un doigt en vue d'opérer une reconnaissance biométrique.

Cette application n'est cependant pas limitative et l'on pourra employer le dispositif 1 pour la prise de capture d'une empreinte d'une autre partie corporelle et par exemple de plusieurs doigts, d'une main entière, d'une paume de main ...

Le dispositif 1 comporte un bloc optique 2 présentant :

- une face supérieure,
- une face inférieure parallèle à la face supérieure, et
- au moins une face latérale reliant la face supérieure à la face inférieure.

Le bloc optique 2 est ici en un matériau transparent à la lumière visible, par exemple, du verre ou du plastique comme par exemple du polycarbonate (PC) ou du poly(méthacrylate de méthyle) (PMMA). Le bloc optique 2 présente un indice de réfraction supérieur à l'indice de réfraction de l'air et optionnellement supérieur à l'indice de réfraction de la peau.

De manière particulière, le bloc optique 2 est ici conformé en un prisme.

Dans le cas présent, une portion seulement de la face supérieure forme une surface d'acquisition 3 sur laquelle un candidat à la reconnaissance biométrique pose un doigt. Optionnellement le bloc optique 2 est encadré en partie d'un bâti 11 comprenant une fenêtre 12 : l'intérieur de la fenêtre délimite la surface d'acquisition 3.

La surface d'acquisition 3 est plane.

Par la suite, les angles sont à considérer en l'absence de partie corporelle posée sur la surface d'acquisition.

Par ailleurs, le dispositif 1 comporte également un système d'acquisition optique 4 configuré pour capturer au moins une image d'une empreinte du doigt d'un candidat à la reconnaissance biométrique apposé sur La surface d'acquisition 3.

Dans le cas présent, le système d'acquisition optique 4 est l'unique système d'acquisition optique du dispositif 1.

Le système d'acquisition optique 4 comporte par exemple au moins un capteur optique, tel qu'une caméra sensible ici au rayonnement lumineux du domaine visible, et optionnellement un ou plusieurs éléments optiques additionnels tels qu'une ou des lentilles et un diaphragme.

Dans le cas présent, le système d'acquisition optique 4, et donc le dispositif 1, comporte un unique capteur optique.

Le système d'acquisition optique 4 est optionnellement agencé pour acquérir la ou les images à travers une première des faces latérales du bloc optique 2 appelée par la suite face de sortie 5. La face de sortie 5 est donc inclinée vis-à-vis de la face supérieure associée à la surface d'acquisition 3.

Dans le cas présent, le système d'acquisition optique 4 est matériellement agencé hors du bloc optique derrière ladite face de sortie 5 de sorte que son champ de vision (ou « field of view » en anglais) soit directement orienté vers la face de sortie 5.

Le champ de vision du système d'acquisition optique 4 est défini par un axe optique 6. On retient donc ici que l'axe optique 6 est dirigé vers la surface d'acquisition et incliné vis-à-vis d'une normale 13 à la surface d'acquisition 3 (i.e. ni parallèle ni orthogonale à celle-ci).

Préférentiellement, l'axe optique 6 forme une normale à la face de sortie 5. L'axe optique forme donc un angle par rapport à la normale à la face de sortie 5 inférieur à l'angle critique $\theta_c$.

Le système d'acquisition optique 4 est par ailleurs agencé de sorte qu'un premier rayon partant de la surface d'acquisition et l'atteignant en se propageant selon l'axe optique 6 forme un angle β par rapport à une normale 13 à la surface d'acquisition 3 qui est supérieur à l'angle critique $\theta_c$ (mais inférieur à l'angle limite $\theta_1$) de sorte que, lorsqu'il y a de l'air au-dessus de la surface d'acquisition 3, aucun rayon provenant de l'extérieur du bloc optique 2 ne puise traverser la surface d'acquisition 3 et se diriger vers le système d'acquisition 4. Dans le cas présent, du fait que l'axe optique 6 est orthogonal à la face de sortie 5 et qu'il soit dirigée vers la surface d'acquisition 3, on a directement le premier rayon confondu avec l'axe optique 6 même lors de sa propagation dans le bloc optique 2. Par la suite on parlera donc uniquement de l'axe optique pour le présent premier mode de réalisation.

Par ailleurs, le dispositif 1 comporte un système d'éclairage 8.

Dans l'exemple illustré, le système d'éclairage 8 est l'unique système d'éclairage 8 du dispositif 1.

Le système d'éclairage 8 comporte au moins une source lumineuse agencée pour émettre un rayonnement lumineux dans le domaine visible.

En remplacement ou en complément, le système d'éclairage 8 et le système d'acquisition optique peuvent travailler dans d'autres plages de longueurs d'ondes et par exemple dans le proche infrarouge proche (i.e. avec une longueur d'onde inférieure à 1.1 micromètres) ou l'ultraviolet si tant est que bloc optique soit transparent à ces longueurs d'ondes. La au moins une source lumineuse du système d'éclairage 8 est composée d'une ou de plusieurs diodes électroluminescentes (DELs) et/ou d'une ou plusieurs diodes supraluminescentes (plus connus sous la désignation anglaise Super Luminescent Diodes ou SLD) et/ou une ou plusieurs diodes lasers.

Dans le cas présent, le système d'éclairage 8 (et donc le dispositif 1) se limite à une unique source lumineuse. Dans le cas présent, la source lumineuse (et donc le système d'éclairage 8 et donc le dispositif 1) est composée d'une unique DEL.

Le système d'éclairage 8 comporte en conséquence ici un unique axe d'éclairage 9 qui est celui de la DEL. Dans le cas présent, le système d'éclairage 8 est apte à générer un faisceau lumineux divergeant autour de l'axe d'éclairage, faisceau lumineux dirigé vers la surface d'acquisition 3. La divergence est telle que l'ensemble de la surface d'acquisition 3 est éclairée. La divergence est par exemple de 20° au maximum.

Le système d'éclairage 8 est ici agencé pour éclairer à travers une face du bloc optique adjacente à la face de sortie 5. Dans le cas présent, le système d'éclairage 8 éclaire à travers une face 17 reliant la face de sortie 5 à la face supérieure du bloc optique 2, la face de sortie 5 reliant elle-même la face 17 à la face inférieure du bloc optique. En conséquence du côté du système d'éclairage 8 et du système d'acquisition optique 4, le bloc optique 2 présente deux faces latérales entre sa face supérieure et la face inférieure. La face 17 est s'étend ici orthogonalement à la face supérieure du bloc optique 2 au contraire de la face de sortie 5.

Dans le cas présent, le système d'éclairage 8 est matériellement agencé hors du bloc optique 2 derrière ladite face 17 de sorte que le faisceau lumineux qu'il génère soit directement orienté vers la face 17. Par ailleurs, l'axe d'éclairage 9 est incliné par rapport à la face 17. En conséquence les rayons lumineux, formant le faisceau lumineux, sont réfractés par cette dite face 17.

En conséquence un rayon lumineux qui se propage selon l'axe d'éclairage 9, se propage ensuite dans le bloc optique 2 pour former un rayon incident donné 14 au niveau de la surface d'acquisition 3 qui n'est pas confondu avec l'axe d'éclairage 9. Le rayon incident donné 14 forme un angle α avec la normale 13.

Le rayon incident donné 14 se réfléchit sur la surface d'acquisition 3 définissant ainsi un rayon réfléchi donné 15. Le système d'éclairage 8 et le système d'acquisition optique 4 sont par ailleurs agencés de sorte qu'un angle Ω entre le rayon réfléchi donné 15 et l'axe optique 6 soit strictement supérieur à l'angle β.

Dans le cas présent l'angle Ω est supérieur à 60 degrés et est ici supérieur à 70 degrés et est ici supérieur à 90 degrés. L'angle Ω est par exemple de 105 degrés.

Dans le cas présent, l'angle Ω est supérieur à 2β. β est en effet égal à 45 degrés dans le cas présent.

Le système d'éclairage 8 est agencé à proximité du système d'acquisition optique 4.

Le système d'éclairage 8 est agencé au-dessus du système d'acquisition optique 4. Le système d'éclairage 8 n'est par conséquent pas orienté vers le système d'acquisition optique 4. En réalité, le système d'éclairage 8 et le système d'acquisition optique 4 sont globalement orientés dans la même direction et dans un même sens. Optionnellement, le système d'éclairage 8 et le système d'acquisition optique 4 sont agencés de sorte qu'un angle γ entre l'axe optique 6 et le rayon incident donné 14 soit strictement inférieur à β.

Optionnellement l'angle γ est inférieur à 35 degrés et de préférence inférieur à 25 degrés. Dans le cas présent on prend par exemple γ égal à 15 degrés (α étant pris égal à 60 degrés).

Le système d'éclairage 8 est ici agencé de sorte que l'angle α soit supérieur à l'angle β.

Le système d'éclairage 8 est ainsi agencé ici de sorte que l'angle α soit supérieur à l'angle critique $\theta_c$ (mais demeure bien entendu inférieur à l'angle limite $\theta_1$).

Par ailleurs, on agence ici astucieusement le système d'éclairage 8 de sorte que son axe d'éclairage 9 soit parallèle à l'axe optique 6.

De préférence, le système d'éclairage 8 et le système d'acquisition optique 4 sont en outre agencés de sorte que leurs bases respectives s'étendent dans un même plan. Typiquement, le système d'éclairage 8 et le système d'acquisition optique 4 sont montés sur un même support ou sur deux supports distincts mais parallèles entre eux, et optionnellement s'étendant dans un même plan.

Par ailleurs, le bloc optique 2 comprend au moins une zone 10 traitée pour absorber des rayons lumineux émis par le système d'éclairage 8 et réfléchis au niveau de la surface d'acquisition 3.

Par exemple ladite zone 10 est habillée d'un revêtement (directement en étant teintée dans la masse et/ou indirectement par recouvrement d'un côté externe et/ou interne d'au moins une portion d'au moins l'une des faces du bloc optique 2 : la zone 10 traitée peut ainsi être agencée à l'extérieur et/ou à l'intérieur du bloc optique 2) absorbant au moins 95% des rayons lumineux, et de préférence au moins 98% des rayons lumineux, arrivant sur ladite zone. Le revêtement est par exemple un revêtement de couleur sombre (i.e. un revêtement de couleur absorbant au moins 95% des rayons, et de préférence au moins 98% des rayons) et par exemple de couleur noire. Optionnellement ladite zone 10 est agencée sur au moins l'une des faces latérales du bloc optique 2 et de préférence ici la face latérale opposée à la face de sortie 5 et à la face 17 (sur ce côté du bloc optique 2, le bloc optique 2 ne comprend donc qu'une seule face latérale reliant la face supérieure et la face inférieure). De préférence ladite zone 10 s'étend sur au moins toute ladite face latérale opposée.

Le système d'éclairage 8 est ici agencé de sorte que l'ensemble des rayons émis par le système d'éclairage 8, et subissant une réflexion sur la surface d'acquisition 3, finissent, après un nombre quelconque de réflexions sur les faces du bloc optique 2, par atteindre la zone 10.

On a ainsi décrit un dispositif 1 qui possède un angle $\Omega$ de 105° : avec un facteur d'anisotropie g supérieur à 0.6, l'atténuation de l'intensité lumineuse des rayons lumineux diffusés par les empreintes résiduelles grâce au dispositif 1 est supérieure au moins à un facteur 3 vis-à-vis d'un dispositif de l'art antérieur comme celui illustré à la figure 1.

La figure 6 illustre un autre agencement qui est identique à celui de la figure 3 mis à part au niveau du bloc optique 2.

Le bloc optique 2 est ainsi une lame dite lame mince présentant :

- une face supérieure,
- une face inférieure parallèle à la face supérieure, et
- au moins une face latérale reliant la face supérieure à la face inférieure, ladite face s'étendant de manière inclinée entre la face supérieure et la face inférieure. Cette face forme la face de sortie 5.

Au moins une autres des faces latérales s'étend par ailleurs orthogonalement aux faces inférieure et supérieure.

Le bloc optique 2 est ici en un matériau transparent à la lumière visible, par exemple, du verre ou du plastique comme par exemple du polycarbonate (PC) ou du poly(méthacrylate de méthyle) (PMMA). Le bloc optique 2 présente un indice de réfraction supérieur à l'indice de réfraction de l'air et optionnellement supérieur à l'indice de réfraction de la peau.

Dans le cas présent, une portion seulement de la face supérieure forme une surface d'acquisition 3 sur laquelle un candidat à la reconnaissance biométrique pose un doigt. Optionnellement le bloc optique 2 est encadré en partie d'un bâti 11 comprenant une fenêtre 12 : l'intérieur de la fenêtre délimite la surface d'acquisition 3.

La surface d'acquisition 3 est plane.

Par ailleurs du fait que le bloc optique 2 soit conformé en une lame, il est possible que le premier rayon soit réfléchi une à plusieurs fois avant de se propager hors du bloc optique 2 selon l'axe optique 6.

Mis à part cela, le reste de ce qui a été dit pour le deuxième mode de réalisation est donc également applicable au cinquième mode de réalisation en particulier en ce qui concerne les angles $\alpha$, $\beta$, $\gamma$ et $\Omega$. En référence à la figure 7, selon un sixième mode de réalisation, le dispositif de capture biométrique, généralement désigné par 1, est un dispositif de capture pour l'acquisition d'une empreinte d'un doigt en vue d'opérer une reconnaissance biométrique.

Cette application n'est cependant pas limitative et l'on pourra employer le dispositif 1 pour la prise de capture d'une empreinte d'une autre partie corporelle et par exemple de plusieurs doigts, d'une main entière, d'une paume de main ...

Le dispositif 1 comporte un bloc optique 2 présentant :

- une face supérieure,
- une face inférieure parallèle à la face supérieure, et
- au moins une face latérale reliant la face supérieure à la face inférieure.

Le bloc optique 2 est ici en un matériau transparent à la lumière visible, par exemple, du verre ou du plastique comme par exemple du polycarbonate (PC) ou du poly(méthacrylate de méthyle) (PMMA). Le bloc optique 2 présente un indice de réfraction supérieur à l'indice de réfraction de l'air et optionnellement supérieur à l'indice de réfraction de la peau.

De manière particulière, le bloc optique 2 est ici conformé en une lame dit lame mince.

Dans le cas présent, une portion seulement de la face supérieure forme une surface d'acquisition 3 sur laquelle un candidat à la reconnaissance biométrique pose un doigt.

Optionnellement le bloc optique 2 est encadré en partie d'un bâti 11 comprenant une fenêtre 12 : l'intérieur de la fenêtre délimite la surface d'acquisition 3.

La surface d'acquisition 3 est plane.

Par la suite, les angles sont à considérer en l'absence de partie corporelle posée sur la surface d'acquisition.

Par ailleurs, le dispositif 1 comporte également un système d'acquisition optique 4 configuré pour capturer au moins une image d'une empreinte du doigt d'un candidat à la reconnaissance biométrique apposé sur La surface d'acquisition 3.

Dans le cas présent, le système d'acquisition optique 4 est l'unique système d'acquisition optique du dispositif 1.

Le système d'acquisition optique 4 comporte par exemple au moins un capteur optique, tel qu'une caméra sensible ici au rayonnement lumineux du domaine visible, et optionnellement un ou plusieurs éléments optiques additionnels tels qu'une ou des lentilles et un diaphragme.

Dans le cas présent, le système d'acquisition optique 4, et donc le dispositif 1, comporte un unique capteur optique.

Le système d'acquisition optique 4 est optionnellement agencé pour acquérir la ou les images à travers une première des faces latérales du bloc optique 2 appelée par la suite face de sortie 5. La face de sortie 5 est donc inclinée vis-à-vis de la face supérieure associée à la surface d'acquisition 3.

Dans le cas présent, le système d'acquisition optique 4 est matériellement agencé hors du bloc optique derrière ladite face de sortie 5 de sorte que son champ de vision (ou « field of view » en anglais) soit directement orienté vers la face de sortie 5.

Le champ de vision du système d'acquisition optique 4 est défini par un axe optique 6.

Préférentiellement, l'axe optique 6 forme une normale à la face de sortie 5. L'axe optique forme donc un angle par rapport à la normale à la face de sortie 5 inférieur à l'angle critique $\theta_c$.

Le système d'acquisition optique 4 est par ailleurs agencé de sorte qu'un premier rayon 18 partant de la surface d'acquisition et l'atteignant en se propageant selon l'axe optique 6 forme un angle $\beta$ par rapport à une normale 13 à la surface d'acquisition 3 qui est supérieur à l'angle critique $\theta_c$ (mais inférieur à l'angle limite $\theta_1$) de sorte que, lorsqu'il y a de l'air au-dessus de la surface d'acquisition 3, aucun rayon provenant de l'extérieur du bloc optique 2 ne puise traverser la surface d'acquisition 3 et se diriger vers le système d'acquisition 4.

Du fait que le bloc optique 2 soit conformé en une lame, il est possible que le premier rayon 18 soit réfléchi une à plusieurs fois avant de se propager hors du bloc optique 2 selon l'axe optique 6.

La premier rayon 18 est dirigé vers la surface d'acquisition et incliné vis-à-vis d'une normale 13 à la surface d'acquisition 3 (i.e. ni parallèle ni orthogonale à celle-ci).

Par ailleurs, le dispositif 1 comporte un système d'éclairage 8.

Dans l'exemple illustré, le système d'éclairage 8 est l'unique système d'éclairage 8 du dispositif 1.

Le système d'éclairage 8 comporte au moins une source lumineuse agencée pour émettre un rayonnement lumineux dans le domaine visible.

En remplacement ou en complément, le système d'éclairage 8 et le système d'acquisition optique peuvent travailler dans d'autres plages de longueurs d'ondes et par exemple dans le proche infrarouge proche (i.e. avec une longueur d'onde inférieure à 1.1 micromètres) ou l'ultraviolet si tant est que bloc optique soit transparent à ces longueurs d'ondes. La au moins une source lumineuse du système d'éclairage 8 est composée d'une ou de plusieurs diodes électroluminescentes (DELs) et/ou d'une ou plusieurs diodes supraluminescentes (plus connus sous la désignation anglaise Super Luminescent Diodes ou SLD) et/ou une ou plusieurs diodes lasers.

Dans le cas présent, le système d'éclairage 8 (et donc le dispositif 1) se limite à une unique source lumineuse. Dans le cas présent, la source lumineuse (et donc le système d'éclairage 8 et donc le dispositif 1) est composée d'une unique DEL.

Le système d'éclairage 8 comporte en conséquence ici un unique axe d'éclairage 9 qui est celui de la DEL. Dans le cas présent, le système d'éclairage 8 est apte à générer un faisceau lumineux divergeant autour de l'axe d'éclairage, faisceau lumineux dirigé vers la surface d'acquisition 3. La divergence est telle que l'ensemble de la surface d'acquisition 3 est éclairée. La divergence est par exemple de 20° au maximum.

Le système d'éclairage 8 est ici agencé pour éclairer à travers une face du bloc optique adjacente à la face de sortie 5. Dans le cas présent, le système d'éclairage 8 éclaire à travers une face 17 reliant la face de sortie 5 à la face supérieure du bloc optique 2, la face de sortie 5 reliant elle-même la face 17 à la face inférieure du bloc optique. En conséquence du côté du système d'éclairage 8 et du système d'acquisition optique 4, le bloc optique 2 présente deux faces latérales entre sa face supérieure et la face inférieure. La face 17 s'étend ici de manière inclinée vis-à-vis de la face supérieure du bloc optique 2.

Dans le cas présent, le système d'éclairage 8 est matériellement agencé hors du bloc optique 2 derrière ladite face 17 de sorte que le faisceau lumineux qu'il génère soit directement orienté vers la face 17. Par ailleurs, l'axe d'éclairage 9 est incliné par rapport à la face 17 (les rayons lumineux, formant le faisceau lumineux, sont alors réfractés par cette dite face 17) ou orthogonal à ladite face 17.

En conséquence un rayon lumineux qui se propage selon l'axe d'éclairage 9, se propage ensuite dans le bloc optique 2 pour former un rayon incident donné 14 au niveau de la surface d'acquisition 3 qui n'est pas confondu avec l'axe d'éclairage 9. Le rayon incident donné 14 forme un angle $\alpha$ avec la normale 13.

Le rayon incident donné 14 se réfléchit sur la surface d'acquisition 3 définissant ainsi un rayon réfléchi donné 15. Le système d'éclairage 8 et le système d'acquisition optique 4 sont par ailleurs agencés de sorte qu'un angle $\Omega$ entre le rayon réfléchi donné 15 et le premier rayon 18 soit strictement supérieur à l'angle $\beta$.

Dans le cas présent l'angle $\Omega$ est supérieur à 60 degrés et est ici supérieur à 70 degrés et est ici supérieur à 90 degrés. L'angle $\Omega$ est par exemple de 101 degrés.

Dans le cas présent, l'angle $\Omega$ est supérieur à 2$\beta$. $\beta$ est en effet égal à 45 degrés dans le cas présent.

Le système d'éclairage 8 est agencé à proximité du système d'acquisition optique 4.

Le système d'éclairage 8 est agencé au-dessus du système d'acquisition optique 4. Le système d'éclairage 8 n'est par conséquent pas orienté vers le système d'acquisition optique 4.

Optionnellement, le système d'éclairage 8 et le système d'acquisition optique 4 sont agencés de sorte qu'un angle $\gamma$ entre le premier rayon 18 et le rayon incident donné 14 soit strictement inférieur à $\beta$.

Optionnellement l'angle $\gamma$ est inférieur à 35 degrés et de préférence inférieur à 25 degrés. Dans le cas présent on prend par exemple $\gamma$ égal à 11 degrés ($\alpha$ étant pris égal à 56 degrés).

Le système d'éclairage 8 est ici agencé de sorte que l'angle $\alpha$ soit supérieur à l'angle $\beta$.

Le système d'éclairage 8 est ainsi agencé ici de sorte que l'angle $\alpha$ soit supérieur à l'angle critique $\theta_c$ (mais demeure bien entendu inférieur à l'angle limite $\theta_1$).

Par ailleurs, le bloc optique 2 comprend au moins une zone 10 traitée pour absorber des rayons lumineux émis par le système d'éclairage 8 et réfléchis au niveau de la surface d'acquisition 3.

Par exemple ladite zone 10 est habillée d'un revêtement (directement en étant teintée dans la masse et/ou indirectement par recouvrement d'un côté externe et/ou interne d'au moins une portion d'au moins l'une des faces du bloc optique 2 : la zone 10 traitée peut ainsi être agencée à l'extérieur et/ou à l'intérieur du bloc optique 2) absorbant au moins 95% des rayons lumineux, et de préférence au moins 98% des rayons lumineux, arrivant sur ladite zone. Le revêtement est par exemple un revêtement de couleur sombre (i.e. un revêtement de couleur absorbant au moins 95% des rayons, et de préférence au moins 98% des rayons) et par exemple de couleur noire. Optionnellement ladite zone 10 est agencée sur au moins l'une des faces latérales du bloc optique 2 et de préférence ici la face latérale opposée à la face de sortie 5 et à la face 17 (sur ce côté du bloc optique 2, le bloc optique 2 ne comprend donc qu'une seule face latérale reliant la face supérieure et la face inférieure, ladite face s'étendant orthogonalement à la face supérieure et à la face inférieure). De préférence ladite zone 10 s'étend sur au moins toute ladite face latérale opposée.

Le système d'éclairage 8 est ici agencé de sorte que l'ensemble des rayons émis par le système d'éclairage 8, et subissant une réflexion sur la surface d'acquisition 3, finissent, après un nombre quelconque de réflexions sur les faces du bloc optique 2, par atteindre la zone 10.

On a ainsi décrit un dispositif 1 qui possède un angle $\Omega$ de 101°. Par exemple pour un facteur d'anisotropie g de 0.7, l'atténuation est 10 fois supérieure avec le dispositif 1 qu'avec le dispositif de l'art antérieur illustré à la figure 1.

La figure 8 illustre un septième mode de réalisation qui est identique à celui de la figure 7 à la différence qu'on agence astucieusement le système d'éclairage 8 de sorte que son axe d'éclairage 9 soit parallèle à l'axe optique 6.

De préférence, le système d'éclairage 8 et le système d'acquisition optique 4 sont en outre agencés de sorte que leurs bases respectives s'étendent dans un même plan. Typiquement, le système d'éclairage 8 et le système d'acquisition optique 4 sont montés sur un même support ou sur deux supports distincts mais parallèles entre eux, et optionnellement s'étendant dans un même plan.

Le reste de ce qui a été dit pour le sixième mode de réalisation est donc également applicable au septième mode de réalisation en particulier en ce qui concerne les angles $\alpha$, $\beta$, $\gamma$ et $\Omega$.

Bien entendu, l'invention n'est pas limitée aux modes de réalisation décrits mais englobe toute variante entrant dans le champ de l'invention telle que définie par les revendications.

Le dispositif pourra ainsi comporter un bloc optique de forme différente de ce qui a été décrite comme un bloc optique en forme de prisme mais avec un nombre différent de faces latérales. Le bloc optique pourra être conformé autrement et par exemple ne pas être transparent sur tout son volume. Le bloc optique sera bien entendu conformé pour autoriser un trajet lumineux du système d'éclairage au système d'acquisition optique en passant par ledit bloc et notamment la surface d'acquisition.

Le système d'éclairage pourra être agencé à côté du système optique, au-dessous ou au-dessus du système optique, entre le système d'acquisition optique et le système d'acquisition ... Le système d'éclairage et/ou le système d'acquisition optique pourront être portés par une carte à circuits imprimés et éventuellement par la même carte à circuits imprimés.

Optionnellement, le système d'éclairage sera agencé de sorte que son axe d'éclairage soit parallèle ou confondue à l'axe optique du système optique.

Le système d'éclairage pourra être différent de ce qui a été indiqué. Par exemple le système d'éclairage pourra comporter plusieurs sources lumineuses, la source lumineuse pourra comporter plusieurs DELs, le système d'éclairage pourra comporter ou être associé à un ou plusieurs moyens de rétroéclairage... Dans le cas où le système d'éclairage comporte plusieurs sources lumineuses, et par exemple plusieurs DELs, lesdites sources seront de préférence agencées de sorte à avoir toutes leurs axes d'éclairage parallèles entre eux (le système d'éclairage aura alors un axe d'éclairage général parallèle à chacun desdits axes d'éclairage de chacune des sources). De préférence encore, les sources seront toutes agencées dans un même plan. Par exemple les sources pourront être montées sur un même support tel qu'une carte à circuit imprimé. Le système d'éclairage peut comprendre un guide lumineux.

La zone traitée pour absorber des rayons lumineux émis par le système d'éclairage 8 et réfléchis au niveau de la surface d'acquisition 3 pourra ne pas être portée par le bloc optique mais par exemple portée par un élément autre du dispositif comme par exemple le bâti comme cela a été représenté à la figure 4. Il est bien sûr entendu que cet aspect peut être appliqué aux autres modes de réalisation de même que le bloc optique du troisième mode de réalisation pourra porter ladite zone traitée.

Le dispositif pourra ne pas comporter de bâti ou comporter un bâti différent de ce qui a été indiqué. Par exemple toute la face supérieure du bloc optique pourra former toute la surface d'acquisition.

Bien entendu le dispositif peut être configuré de sorte que le premier rayon se réfléchisse un nombre différent de fois que ce qui a été illustré avant d'atteindre le système d'acquisition optique et/ou de sorte que le rayon se propageant le long de l'axe d'éclairage se réfléchisse un nombre différent de fois que ce qui a été illustré avant d'atteindre la surface d'acquisition.

Le système d'éclairage pourra être agencé différemment de ce qui a été illustré. Par exemple en référence à la figure 2 on pourrait avoir le système d'éclairage agencé de manière symétrique vis-à-vis de l'axe optique.

On pourra bien entendu combiner un ou plusieurs modes de réalisation décrits.

## Revendications

1. Dispositif de capture biométrique comprenant :

- un bloc optique (2) intégrant une surface d'acquisition (3) sur laquelle un utilisateur pose en service au moins une partie corporelle portant au moins une empreinte,
- un système d'acquisition optique (4) configuré pour acquérir au moins une image d'au moins une empreinte de ladite partie corporelle à travers au moins une face du bloc dit face de sortie (5), le système d'acquisition optique étant agencé de sorte qu'un premier rayon lumineux se propageant, hors du bloc optique, le long d'un axe optique (6) dudit système d'acquisition optique forme, au niveau de la surface d'acquisition (3), un angle β par rapport à une normale (13) à la surface d'acquisition d'une valeur supérieure à un angle critique dépendant des indices de réfraction du bloc optique et de l'air, le système d'acquisition optique étant par ailleurs agencé de sorte que l'axe optique (6) forme un angle par rapport à une normale à la face de sortie (5) inférieur audit angle critique,
- un système d'éclairage (8) configuré pour permettre un éclairage de la surface d'acquisition (3), le système d'éclairage générant un faisceau lumineux défini par un axe d'éclairage (9), un deuxième rayon lumineux se propageant selon l'axe d'éclairage (9) hors du bloc optique, se propage ensuite dans le bloc optique pour former un rayon incident donné (14) au niveau de la surface d'acquisition (3), rayon incident donné (14) qui se réfléchit sur la surface d'acquisition (3) pour définir ainsi un rayon réfléchi donné (15), **caractérisé en ce que** le système, d'éclairage et le système d'acquisition optique étant agencés de sorte qu'un angle Ω entre :

- le rayon réfléchi donné (15), si le rayon réfléchi donné (15) appartient à un plan défini par la normale (13) à la surface d'acquisition (3) et le premier rayon, ou la projection du rayon réfléchi donné (15) dans ledit plan dans le cas contraire, et
- le premier rayon

soit strictement supérieur à l'angle β.

2. Dispositif selon la revendication 1, dans lequel le système d'éclairage (8) éclaire à travers une face (16) du bloc optique adjacente à la face de sortie (5).

3. Dispositif selon la revendication 1 ou la revendication 2, dans lequel le système d'acquisition optique (4) est agencé de sorte que son axe optique (6) forme un angle par rapport à la normale à la face de sortie (5) inférieur à deux degrés.

4. Dispositif selon l'une des revendications 1 à 3, dans lequel l'angle Ω est supérieur à 60 degrés.

5. Dispositif selon l'une des revendications 1 à 4, dans lequel l'angle Ω est inférieur à 2β.

6. Dispositif selon l'une des revendications 1 à 5, dans lequel le système d'éclairage (8) et le système d'acquisition optique (4) sont agencés de sorte qu'un angle γ entre le premier rayon et le rayon incident donné (14) soit strictement inférieur à β.

7. Dispositif selon la revendication 6, dans lequel l'angle γ est inférieur à 35 degrés.

8. Dispositif selon l'une des revendications 1 à 7, dans lequel l'angle entre le rayon incident donné (14) et la normale (13) à la surface d'acquisition (3) est supérieur à β.

9. Dispositif selon l'une des revendications 1 à 8, comportant un unique système d'éclairage et/ou un unique système d'acquisition optique.

10. Dispositif selon l'une des revendications 1 à 9, dans lequel le système d'éclairage (8) et le système d'acquisition optique (4) sont portés par des supports s'étendant dans des plans confondus ou parallèles.

11. Dispositif selon l'une des revendications 1 à 10, dans lequel le bloc optique (2) est conformé en un prisme.

12. Dispositif selon l'une des revendications 1 à 11, dans lequel le bloc optique (2) est conformé en une lame :

- à faces parallèles, avec une face latérale inclinée au moins en partie ou
- mince avec une pluralité de micro-prismes en face inférieure.

13. Dispositif selon l'une des revendications 1 à 12, comportant au moins une zone (10) traitée pour absorber des rayons lumineux émis par le système d'éclairage (8) et réfléchis au niveau de la surface d'acquisition (3).

14. Dispositif selon la revendication 13, dans lequel ladite zone (10) est traitée en étant habillée d'un revêtement de couleur sombre.

15. Dispositif selon l'une des revendications 1 à 14, dans lequel le système d'acquisition optique (4) et le système d'éclairage (8) sont à proximité l'un de l'autre.


**Patentansprüche**

1. Vorrichtung zur biometrischen Erfassung, umfassend:

- einen optischen Block (2), der eine Aufnahmefläche (3) beinhaltet, auf die ein Benutzer im Betrieb mindestens einen Körperteil legt, der mindestens einen Abdruck trägt,
- ein optisches Aufnahmesystem (4), das dazu ausgestaltet ist, mindestens ein Bild mindestens eines Abdrucks des Körperteils durch mindestens eine Seite des Blocks hindurch, Austrittseite (5) genannt, aufzunehmen, wobei das optische Aufnahmesystem so angeordnet ist, dass ein erster Lichtstrahl, der sich außerhalb des optischen Blocks entlang einer optischen Achse (6) des optischen Aufnahmesystems ausbreitet, an der Aufnahmefläche (3) einen Winkel β in Bezug auf eine Senkrechte (13) zur Aufnahmefläche bildet mit einem Wert, der größer als ein kritischer Winkel ist, der von den Brechungsindizes des optischen Blocks und der Luft abhängt, wobei der optische Aufnahmeblock im Übrigen so angeordnet ist, dass die optische Achse (6) einen Winkel in Bezug auf eine Senkrechte zu der Austrittsseite (5) bildet, der kleiner als der kritische Winkel ist,

- ein Beleuchtungssystem (8), das dazu ausgestaltet ist, eine Beleuchtung der Aufnahmefläche (3) zu ermöglichen, wobei das Beleuchtungssystem einen Lichtstrahl erzeugt, der durch eine Beleuchtungsachse (9) definiert ist, wobei ein zweiter Lichtstrahl sich entlang der Beleuchtungsachse (9) außerhalb des optischen Blocks ausbreitet, sich anschließend in dem optischen Block ausbreitet, um einen gegebenen einfallenden Strahl (14) an der Aufnahmefläche (3) zu bilden, wobei der gegebene einfallende Strahl (14) auf der Aufnahmefläche (3) reflektiert wird, um so einen gegebenen reflektierten Strahl (15) zu bilden, **dadurch gekennzeichnet, dass** das Beleuchtungssystem und das Aufnahmesystem so angeordnet sind, dass ein Winkel Ω zwischen:
- dem gegebenen reflektierten Strahl (15), wenn der gegebene reflektierte Strahl (15) einer Ebene angehört, die durch die Senkrechte (13) zur Aufnahmefläche (3) und den ersten Strahl gebildet wird, oder anderenfalls der Projektion des gegebenen reflektierten Strahls (15) in der Ebene und
- dem ersten Strahl strikt größer als der Winkel β ist.

2. Vorrichtung nach Anspruch 1, bei der das Beleuchtungssystem (8) durch eine Seite (16) des optischen Blocks hindurch beleuchtet, die an die Austrittsseite (5) angrenzt.

3. Vorrichtung nach Anspruch 1 oder Anspruch 2, bei der das optische Aufnahmesystem (4) so angeordnet ist, dass seine optische Achse (6) einen Winkel in Bezug auf die Senkrechte zur Austrittsseite (5) bildet, der kleiner als zwei Grad ist.

4. Vorrichtung nach einem der Ansprüche 1 bis 3, bei welcher der Winkel Ω größer als 60 Grad ist.

5. Vorrichtung nach einem der Ansprüche 1 bis 4, bei welcher der Winkel Ω kleiner als 2β ist.

6. Vorrichtung nach einem der Ansprüche 1 bis 5, bei der das Beleuchtungssystem (8) und das optische Aufnahmesystem (4) so angeordnet sind, dass ein Winkel γ zwischen dem ersten Strahl und dem gegebenen einfallenden Strahl (14) strikt kleiner als β ist.

7. Vorrichtung nach Anspruch 6, bei welcher der Winkel γ kleiner als 35 Grad ist.

8. Vorrichtung nach einem der Ansprüche 1 bis 7, bei welcher der Winkel zwischen dem gegebenen einfallenden Strahl (14) und der Senkrechten (13) zur Aufnahmefläche (3) größer als β ist.

**9.** Vorrichtung nach einem der Ansprüche 1 bis 8, die ein einziges Beleuchtungssystem und/oder ein einziges optisches Aufnahmesystem beinhaltet.

**10.** Vorrichtung nach einem der Ansprüche 1 bis 9, bei der das Beleuchtungssystem (8) und das optische Aufnahmesystem (4) von Halterungen getragen werden, die sich in identischen oder parallelen Ebenen erstrecken.

**11.** Vorrichtung nach einem der Ansprüche 1 bis 10, bei welcher der optische Block (2) als Prisma gestaltet ist.

**12.** Vorrichtung nach einem der Ansprüche 1 bis 11, bei welcher der optische Block (2) als Platte gestaltet ist:

- die parallele Seiten hat, mit einer mindestens teilweise geneigten seitlichen Seite, oder
- die dünn ist, mit einer Mehrzahl von Mikroprismen an der Unterseite.

**13.** Vorrichtung nach einem der Ansprüche 1 bis 12, die mindestens einen Bereich (10) beinhaltet, der behandelt ist, um Lichtstrahlen zu absorbieren, die von dem Beleuchtungssystem (8) ausgesendet werden und an der Aufnahmefläche (3) reflektiert werden.

**14.** Vorrichtung nach Anspruch 13, bei welcher der Bereich (10) behandelt ist, indem er mit einer Beschichtung in dunkler Farbe überzogen ist.

**15.** Vorrichtung nach einem der Ansprüche 1 bis 14, bei der das optische Aufnahmesystem (4) und das Beleuchtungssystem (8) nah beieinander liegen.

**Claims**

**1.** Biometric capture device comprising:

- an optical block (2) integrating an acquisition surface (3) on which a user places, in service, at least one body part having at least one print,
- an optical acquisition system (4) configured to acquire at least one image of at least one print of said body part through at least one face of the block, called exit face (5), the optical acquisition system being arranged such that a first light ray propagating, outside the optical block, along an optical axis (6) of said optical acquisition system forms, on the acquisition surface (3), an angle β with respect to a normal (13) to the acquisition surface with a value greater than a critical angle depending on the refractive indices of the optical block and of air, the optical acquisition system also being arranged such that the optical axis (6) forms an angle with respect to a normal to the exit face (5) less than said critical angle,
- an illumination system (8) configured to allow illumination of the acquisition surface (3), the illumination system generating a light beam defined by an illumination axis (9),
a second light ray propagating along the illumination axis (9) outside the optical block, then propagates in the optical block so as to form a given incident ray (14) on the acquisition surface (3), which given incident ray (14) is reflected from the acquisition surface (3) so as thus to define a given reflected ray (15), **characterized in that** the illumination system and the optical acquisition system are arranged such that an angle Ω between:

- the given reflected ray (15), if the given reflected ray (15) belongs to a plane defined by the normal (13) to the acquisition surface (3) and the first ray, or the projection of the given reflected ray (15) into said plane if not, and
- the first ray

is strictly greater than the angle β.

**2.** Device according to Claim 1, wherein the illumination system (8) illuminates through a face (16) of the optical block adjacent to the exit face (5).

**3.** Device according to Claim 1 or Claim 2, wherein the optical acquisition system (4) is arranged such that its optical axis (6) forms an angle with respect to the normal to the exit face (5) less than two degrees.

**4.** Device according to one of Claims 1 to 3, wherein the angle Ω is greater than 60 degrees.

**5.** Device according to one of Claims 1 to 4, wherein the angle Ω is less than 2β.

**6.** Device according to one of Claims 1 to 5, wherein the illumination system (8) and the optical acquisition system (4) are arranged such that an angle γ between the first ray and the given incident ray (14) is strictly less than β.

**7.** Device according to Claim 6, wherein the angle γ is less than 35 degrees.

**8.** Device according to one of Claims 1 to 7, wherein the angle between the given incident ray (14) and the normal (13) to the acquisition surface (3) is greater than β.

**9.** Device according to one of Claims 1 to 8, comprising a single illumination system and/or a single optical acquisition system.

10. Device according to one of Claims 1 to 9, wherein the illumination system (8) and the optical acquisition system (4) are carried by supports extending in coincident or parallel planes.

11. Device according to one of Claims 1 to 10, wherein the optical block (2) is designed as a prism.

12. Device according to one of Claims 1 to 11, wherein the optical block (2) is designed as a slide:

    - with parallel faces, with an at least partially inclined side face, or
    - that is thin with a plurality of micro-prisms on its lower face.

13. Device according to one of Claims 1 to 12, comprising at least one region (10) that is treated so as to absorb light rays emitted by the illumination system (8) and reflected at the acquisition surface (3).

14. Device according to Claim 13, wherein said region (10) is treated by being covered with a dark coating.

15. Device according to one of Claims 1 to 14, wherein the optical acquisition system (4) and the illumination system (8) are close to one another.

[Fig. 1]

[Fig. 2]

[Fig. 3]

[Fig. 4]

EP 4 105 897 B1

[Fig. 5]

[Fig. 6]

20

[Fig. 7]

[Fig. 8]

**EP 4 105 897 B1**

## RÉFÉRENCES CITÉES DANS LA DESCRIPTION

**Documents brevets cités dans la description**

- US 2005271258 A1